# FASCICULE DE BREVET EUROPEEN

(11) **EP 1 600 552 B1**
(45) Date de publication et mention de la délivrance du brevet: **24.12.2008**
(21) Numéro de dépôt: 05370008.4
(22) Date de dépôt: 29.04.2005
(51) Int. Cl.: D06M 17/08

(54) **Procédé de fabrication d'un entoilage thermocollant et entoilage thermocollant obtenu**
Verfahren zur Herstellung eines einbügelbaren Einlagestoffs, sowie dadurch hergestellter Einlagestoff
Method for making a fusible interlining and fusible interlining obtained thereby

(30) Priorité: 24.05.2004 FR 0405586
(43) Date de publication de la demande: 30.11.2005
(73) Titulaire: LAINIERE DE PICARDIE BC, 80200 Péronne (FR)
(72) Inventeur: Lefebvre, Jean, 80200 Estree-Mons (FR); Labre, François, 02100 Saint Quentin (FR); Le Houarner, Yves, 80200 Flamicourt (FR)
(74) Mandataire: Hennion, Jean-Claude

(56) Documents cités:
- EP-A- 0 503 204
- EP-A- 0 792 591
- EP-A- 1 314 366
- FR-A- 2 746 264

## Description

La présente invention concerne le domaine des entoilages thermocollants qui sont des supports, textiles ou non-tissés, sur une face desquels est appliqué un polymère thermo-adhésif sous forme de points, ledit polymère étant apte à adhérer ultérieurement sur une pièce d'habillement à renforcer sous l'effet de l'application d'une certaine pression à chaud.

Parmi tous les problèmes rencontrés dans le domaine de l'entoilage thermocollant, l'un des plus délicats à résoudre consiste dans le risque de transpercement du support d'entoilage lors de l'application par pression à chaud de l'entoilage thermocollant contre la pièce d'habillement à renforcer. En effet la température qui est choisie pour effectuer cette application à chaud doit permettre de réaliser la fusion du polymère thermo-adhésif de manière à ce que le polymère ainsi fondu puisse se répartir et adhérer sur les fibres ou filaments en surface de la pièce d'habillement. Il arrive cependant que le polymère flue à travers les fibres ou filaments et apparaît sur la surface opposée du support d'entoilage. Ceci peut avoir une incidence sur le plan esthétique si l'entoilage est destiné à être apparent et à former la face arrière du vêtement. De plus et surtout ce transpercement a pour effet d'augmenter localement la rigidité de l'entoilage et donc de la pièce d'habillement, ce qui peut être contraire à l'effet souhaité. Il peut également provoquer des collages sur les tissus de doublage tels que doublures et parties de draperie en revers, ce qui provoque une dégradation de la qualité du vêtement.

Une solution à ce problème a été apportée, notamment par le document FR 2 177 038, qui consiste à déposer sur le support d'entoilage des points constitués d'au moins deux couches superposées formées de polymère thermo-adhésif de compositions différentes , de sorte que la sous-couche qui est appliquée directement sur le support d'entoilage possède un fluage thermoplastique plus faible que celui de la couche supérieure , dans les conditions normales de température et de pression d'application de l'entoilage thermocollant sur la pièce d'habillement. Cette différence de fluage peut notamment être obtenue en utilisant pour la sous-couche un polymère possédant une viscosité de fusion plus grande et/ou une plage de température de début de fusion plus élevée que le polymère de la couche supérieure. Ainsi lors de l'application de l'entoilage thermocollant sur la pièce d'habillement, le polymère formant la sous-couche crée en quelque sorte une barrière protectrice, qui empêche le fluage du point sur la face envers du support d'entoilage.

L'application de la couche supérieure peut notamment être réalisée par saupoudrage de particules de polymère puis élimination, par aspiration, des particules qui n'adhèrent pas sur la sous-couche qui a été déposée à l'état pâteux.

Après dépôt des points de polymère, constitués de la sous-couche et de la couche supérieure, le support d'entoilage peut passer dans une enceinte de chauffage afin de mettre en fusion les particules de polymère thermo-adhésif de la couche supérieure. Il convient en effet que l'entoilage thermocollant puisse être enroulé et manipulé sans risque de perte de particules de polymère thermo-adhésif constituant la couche supérieure. Ce traitement thermique a donc pour but de consolider le point en créant une adhésion entre le polymère de la sous-couche et celui de la couche supérieure. De plus cette opération de chauffage a pour but d'éliminer le solvant de la sous-couche à l'état pâteux.

Cette technique présente cependant une limite qui réside dans le risque de délaminage des points de polymère thermocollant, entre la sous-couche et la couche supérieure. En effet, même si la sous-couche et la couche supérieure adhèrent l'une à l'autre grâce à la fusion des particules constituant la couche supérieure, cette adhésion s'avère le plus souvent insuffisante pour éviter tout risque de séparation entre l'entoilage thermocollant et la pièce d'habillement lorsqu'on exerce une traction entre ces deux éléments, cette séparation intervenant précisément au niveau de la zone de liaison entre la sous-couche et la couche supérieure qui constitue une zone de moindre résistance mécanique.

On a déjà cherché dans les documents EP 855 146 et EP 1 314 366 à pallier cet inconvénient en revenant à une solution mettant en oeuvre des points de polymère composés non plus d'une sous-couche et d'une couche supérieure mais des points de polymère monoblocs dans lesquels l'effet de barrière protectrice est créée par une modification localisée du polymère constituant le point.

Dans le document EP 855 146, les points de polymère thermo-fusible contiennent un activateur radicalaire et on soumet l'une des faces du support d'entoilage à un bombardement électronique en réglant la profondeur de pénétration des électrons dans les points de polymère thermo-fusible, en sorte d'obtenir une modification des propriétés physicochimiques du polymère thermo-fusible, choisi parmi la température du fusion et la viscosité, sur une épaisseur limitée e par rapport à l'épaisseur moyenne E des points de polymère.

C'est cette modification des propriétés physicochimiques du polymère thermo-fusible qui permet de créer une différenciation entre la partie supérieure du point du polymère qui est destiné à remplir son rôle de polymère thermo-adhésif et la partie inférieure du point de polymère, à proximité du support d'entoilage, qui fait office de barrière protectrice et évite le fluage de la partie supérieure du point sur l'envers du support d'entoilage lors de l'application par pression à chaud de l'entoilage thermocollant contre la pièce d'habillement à renforcer.

Dans le document EP 1 314 366, la présence d'agent radicalaire dans le polymère constituant chaque point est remplacée par une fonctionnalisation dudit polymère.

Cette solution qui évite le phénomène de délaminage présente cependant des inconvénients.

D'une part, elle nécessite un réglage fin de la pénétration des électrons dans les points de polymère, réglage qui est d'autant plus délicat que c'est la face envers du support d'entoilage qui est soumis au bombardement électronique et qu'il faut donc tenir compte des éventuels effets dus à la présence de ce support d'entoilage.

De plus, il est nécessaire de réaliser un mélange parfaitement homogène de l'activateur radicalaire dans chaque point de polymère ou éventuellement une parfaite homogénéité de la fonctionnalisation du polymère constituant chaque point.

D'autre part, cette solution entraîne un surcoût de matières consommables qui n'est pas techniquement justifié ; en effet, c'est le volume total de chaque point qui comporte un agent radicalaire ou dont le polymère est fonctionnalisé alors que seule une faible partie de ce volume, sur l'épaisseur e, justifie la mise en oeuvre de cet agent radicalaire ou de cette fonctionnalisation.

Le but de la présente invention est de pallier les inconvénients du délaminage des deux couches superposées dans la technique connue par le document FR 2 177 038 tout en évitant les problèmes posés par les deux documents EP 855 146 et EP 1 314 366.

Ce but est parfaitement atteint par le procédé de fabrication d'un entoilage thermocollant qui consiste :
a) à déposer, au moyen d'un cadre d'impression sérigraphique, directement sur la surface d'un support, textile ou non tissé, des points de polymère formant une sous-couche de protection, ledit polymère étant un polymère thermo-fusible non réticulé mais réticulable, avec ou sans adjonction d'un activateur radicalaire par application d'un bombardement électronique,
b) à déposer sur la sous-couche une couche supérieure de polymère thermo-adhésif, non réticulable par application d'un bombardement électronique, qui a une structure polymérique qui est compatible avec celle du polymère de la sous-couche,
c) à soumettre le support à un traitement thermique en sorte de faire fondre ledit polymère thermo-adhésif sur ladite sous-couche de protection et
d) après le traitement thermique, à soumettre le support d'entoilage à l'action d'un bombardement électronique en sorte de réticuler le polymère de ladite sous-couche.

Ainsi, lors du traitement thermique, le polymère thermo-adhésif à l'état fondu interpénètre la structure polymérique du polymère de la sous-couche, grâce à la compatibilité de leur structure polymérique respective.

De préférence, le polymère de la sous-couche et le polymère de la couche supérieure ont la même structure polymérique, s'agissant principalement de copolyamide ou de polyéthylène ou éventuellement de copolyester ou de polyuréthane.

De ce fait, le traitement thermique provoque non seulement la fusion du polymère thermo-adhésif de la couche supérieure mais également celle du polymère réticulable de la sous-couche, ce qui homogénéise la structure de chaque point de polymère en surface du support d'entoilage.

La même structure polymérique, pour le polymère de la sous-couche et de la couche supérieure, peut être obtenue soit en mettant en oeuvre strictement le même polymère mais avec l'addition d'un agent radicalaire dans la sous-couche, soit en mettant en oeuvre des polymères de grades différents, ce qui permet également de faire varier les points de fusion.

L'application du bombardement électronique intervient de préférence après refroidissement des points de polymère.

Dans une variante de réalisation, le traitement thermique d'une part et l'application du bombardement électronique d'autre part sont des opérations indépendantes, réalisées sur des installations séparées.

En effet, il est tout à fait possible d'enrouler sur lui-même le support d'entoilage après que les points de polymère ont subi le traitement thermique et ont été refroidis.

On peut donc réaliser sur une installation conventionnelle le dépôt des points de polymère, leur traitement thermique et leur refroidissement sur une autre installation spécifique, l'application du rayonnement dans des conditions opératoires différentes, notamment de vitesse.

Ceci permet d'optimiser les coûts de fabrication de l'entoilage thermocollant selon le procédé de l'invention.

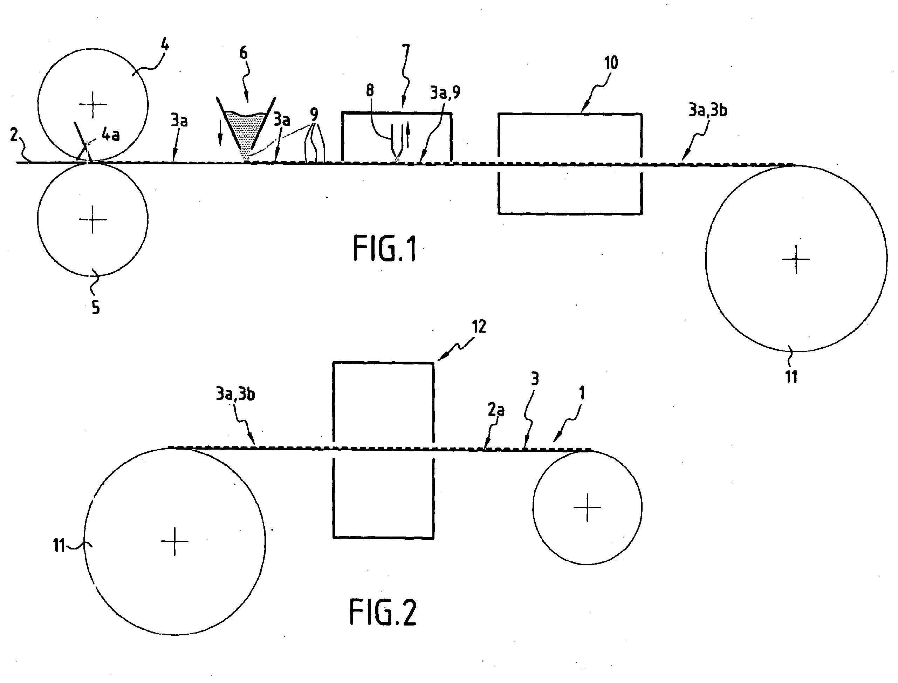

La présente invention sera mieux comprise à la lecture de la description d'exemples d'entoilages thermocollants obtenus sur l'installation illustrée de manière schématique sur la figure unique annexée.

L'entoilage thermocollant 1 dont la fabrication va être décrite ci-après comprend d'une part un support d'entoilage 2, qui est un support textile tissé ou tricoté ou un non-tissé, et d'autre part des points 3 de polymère qui sont disposés sur l'une des faces 2a du support d'entoilage.

Chaque point de polymère 3 est formé de deux couches qui ont été déposées successivement sur le support d'entoilage 2, à savoir une sous-couche 3a et une couche supérieure 3b.

La couche supérieure 3b est dans un polymère thermo-adhésif.

La sous-couche 3a est dans un polymère réticulé dont la structure polymérique est compatible avec celle du polymère de la couche supérieure 3b, de préférence un polymère réticulé qui a la même structure polymérique que celle du polymère de la couche supérieure 3b.

Lors du dépôt sur le support d'entoilage 2 de la sous-couche 3a, le polymère réticulable n'est pas encore réticulé, sa réticulation intervenant lors du processus de fabrication de l'entoilage thermocollant 1 comme cela sera expliqué ci-après.

Le dépôt de la sous-couche 3a de chaque point de polymère 3 est réalisé en mettant en oeuvre un cadre d'impression sérigraphique 4 qui coopère d'une part, avec une racle intérieure 4a et d'autre part, avec un contre-cylindre 5.

La sous-couche 3a, se présentant sous forme d'une pâte ou d'une dispersion dans un solvant notamment une dispersion aqueuse, est déposée directement sur le support d'entoilage 2 lors du passage de celui-ci au niveau de la ligne de tangence entre le cadre sérigraphique 4 et le contre-cylindre 5.

Une couche supérieure 3b est ensuite déposée sur chaque sous-couche 3a.

Dans l'exemple illustré, ce dépôt a lieu en dispersant, grâce à un dispositif de projection 6 le polymère thermo-adhésif sous forme de particules sur le support d'entoilage 2 préalablement enduit des sous-couches 3a.

Du fait de la présentation desdites sous-couches 3a sous forme de pâte ou de dispersion, les particules de polymère thermo-adhésif, qui sont en contact avec lesdites sous-couches, adhérent à la surface de celles-ci.

Les particules, qui tombent sur le support d'entoilage 2 mais sans être en contact avec les sous-couches 3a, n'adhérent pas au dit support d'entoilage 2 et peuvent donc être facilement éliminées.

Cette élimination de l'excès de particules qui n'adhérent pas aux sous-couches 3a est réalisée dans le dispositif d'élimination 7, notamment par aspiration 8.

Ainsi à la sortie du dispositif d'élimination 7, sur la face enduite 2a du support d'entoilage 2, sont réparties des sous-couches 3a surmontées de particules de polymère thermo-adhésif 9.

Le support d'entoilage ainsi enduit de ces doubles couches passe ensuite dans une enceinte 10 de chauffage dans des conditions de température et de durée de traitement qui permettent d'obtenir la fusion des particules 9 ainsi que l'évaporation du solvant des sous-couches 3a.

Lors de cette fusion, il se produit une interpénétration du polymère thermo-adhésif dans la structure du polymère formant la sous-couche 3a, interpénétration qui favorise l'homogénéité du point de polymère 3 et diminue donc les risques de délaminage entre la sous-couche 3a et la couche supérieure 3b.

Ce risque de délaminage est encore diminué lorsqu'on utilise comme polymère de la sous-couche 3a, un polymère qui a la même structure polymérique que le polymère thermo-adhésif de la couche supérieure 3b, et qui est amené également à fondre lors du traitement thermique.

Après le passage dans l'enceinte de chauffage 10 et après refroidissement, notamment grâce à des buses ou rampes de projection d'air froid ou par passage sur un ou plusieurs cylindres refroidis, le support d'entoilage 2 enduit des sous-couches 3a et des couches supérieures 3b est enroulé sur lui-même sous forme d'une bobine 11. Cette bobine 11 est soumise, dans une autre installation, éventuellement délocalisée par rapport à celle qui a été décrite précédemment, à l'application d'un bombardement électronique permettant de réticuler le polymère des sous-couches 3a et obtenir ainsi les points de polymère 3 conformes au procédé de l'invention.

Ce bombardement électronique est obtenu à partir d'un canon à électrons industriel.

Contrairement à ce qui était prévu dans les documents EP 855 146 et EP 1 314 366, il n'est plus besoin d'avoir un réglage très précis de la pénétration du faisceau d'électrons. Il suffit que cette pénétration soit suffisante dans la sous-couche 3a pour permettre la réticulation du polymère de ladite sous-couche.

Si le faisceau d'électrons pénètre également dans la couche supérieure 3b, ceci n'a pas d'incidence puisque le polymère thermo-adhésif constitutif de cette couche supérieure 3b n'est pas lui-même réticulable par bombardement électronique.

La réticulation du polymère de la sous-couche 3b modifie les propriétés physicochimiques de ce polymère, notamment sa température de fusion et/ou sa viscosité en sorte que, de manière connue par les documents précités, cette sous-couche 3a forme la barrière protectrice recherchée.

De préférence, les points de polymère thermo-fusible formant la sous-couche de protection contiennent un activateur radicalaire, par exemple un monomère de type acrylate, choisi notamment parmi le triméthylolpropane triméthacrylate et le triméthylolpropane triacrylate.

Dans un exemple précis de réalisation donné à titre non exhaustif, la couche supérieure 3b est réalisée à partir de particules 9 de copolyamide et la sous-couche 3a est réalisée à partir d'une dispersion de poudre de copolyamide en mélange avec un activateur radicalaire qui, en l'occurrence, est le triméthylolpropane triméthacrylate à raison de 10% en poids de l'activateur radicalaire par rapport au polyamide.

Des tests comparatifs ont été menés entre cet entoilage thermocollant (A) et un entoilage conventionnel (B) dont chaque point de polymère est formé d'une couche supérieure du même polymère thermo-adhésif en polyamide et dont la sous-couche de protection est en polyéthylène haute densité.

Il ressort de ces tests que l'entoilage thermocollant (A) de l'invention présente une force de collage qui est, aux températures habituelles de contre-collage de l'entoilage sur la pièce d'habillement, supérieure de 20 à plus de 50% à celle obtenue avec l'entoilage conventionnel (B), en fonction de la température mise en oeuvre.

Il ressort également de ces tests de traversée, réalisés dans les conditions prévues dans le document EP 0 855 146, que l'entoilage thermocollant (A) de l'invention présente des valeurs de traversée qui sont comparables à celles obtenues avec l'entoilage conventionnel (B).

La présente invention n'est pas limitée aux modes de réalisation ci-dessus.

Le polymère réticulable de la sous-couche 3a peut bien sûr être un polymère fonctionnalisé tel que décrit dans le document EP 1 314 366.

Dans ce cas, les points de polymère thermofusible forment la sous-couche de protection à base d'un polymère fonctionnel comportent des groupements fonctionnels générateurs de radicaux libres sous l'action d'un bombardement électronique, et des groupements fonctionnels aptes à réagir avec des radicaux libres ainsi formés.

Le dépôt des couches supérieures 3b peut se faire également au moyen d'un cadre sérigraphique identique à celui réalisant le dépôt des sous-couches 3a et dont le fonctionnement est parfaitement synchronisé pour que les couches supérieures 3b soient déposées sur les sous-couches 3a.

## Revendications

1. Procédé de fabrication d'un entoilage thermocollant **caractérisé en ce qu'**il consiste :
a) à déposer, au moyen d'un cadre d'impression sérigraphique, directement sur la surface d'un support (2), textile ou non tissé, des points de polymère formant une sous-couche (3a) de protection, ledit polymère étant un polymère thermo-fusible non réticulé mais réticulable par application d'un bombardement électronique,
b) à déposer sur la sous-couche (3a) une couche supérieure (3b) de polymère thermo-adhésif, non réticulable par application d'un bombardement électronique, qui a une structure polymérique qui est compatible avec celle du polymère de la sous-couche,
c) à soumettre le support (2) à un traitement thermique en sorte de faire fondre ledit polymère thermo-adhésif sur ladite sous-couche de protection, et
d) après traitement thermique, à soumettre le support d'entoilage à l'action d'un bombardement électronique en sorte de réticuler le polymère de ladite sous-couche.

2. Procédé selon la revendication 1 **caractérisé en ce que** le polymère de la sous-couche (3a) et le polymère de la couche supérieure (3b) ont la même structure polymérique, s'agissant notamment de copolyamide ou de polyéthylène.

3. Procédé selon l'une des revendications 1 ou 2 **caractérisé en ce que** l'application du bombardement électronique intervient après refroidissement des points de polymère.

4. Procédé selon la revendication 3 **caractérisé en ce que** le traitement thermique d'une part et l'application du rayonnement d'autre part sont des opérations indépendantes, réalisées sur des installations séparées.

5. Procédé selon l'une des revendications 1 à 4 **caractérisé en ce que** les points de polymère thermo-fusible formant la sous-couche de protection contiennent un activateur radicalaire, par exemple un monomère de type acrylate, choisi notamment parmi le triméthylolpropane triméthacrylate et le triméthylolpropane triacrylate.

6. Procédé selon la revendication 5, **caractérisé en ce que** la couche supérieure est réalisée à partir de particules de copolyamide et la sous-couche est réalisée à partir d'une dispersion de poudre de copolyamide en mélange avec un activateur radicalaire, par exemple le triméthylolpropane triméthacrylate à raison de 10% en poids d'activateur radicalaire par rapport au polyamide.

7. Procédé selon l'une des revendications 1 à 4, **caractérisé en ce que** les points de polymère thermo-fusible formant la sous-couche de protection sont à base d'un polymère fonctionnel comportant des groupements fonctionnels générateurs de radicaux libres sous l'action d'un bombardement électronique et des groupements fonctionnels aptes à réagir avec des radicaux libres ainsi formés.

## Claims

1. A method of fabricating an iron-on interlining, **characterized in that** the method consists in:
a) using silkscreen printing to deposit polymer spots directly on the surface of a woven or non-woven fabric (2), which spots form a protective underlayer (3a), said polymer being a non-cured hot-melt polymer that is curable by applying electron bombardment,
b) depositing an outer layer (3b) of hot-stick polymer on the underlayer (3a), the outer layer not being curable by applying electron bombardment and being of a polymeric structure that is compatible with that of the polymer of the underlayer,
c) subjecting the fabric (2) to heat treatment so as to melt said hot-stick polymer on said protective underlayer, and
d) subjecting, after heat treatment, the interlining to the action of electron bombardment so as to cure the polymer of said underlayer.

2. The method according to claim 1, **characterized in that** the polymer of the underlayer (3a) and the polymer of the outer layer (3b) have the same polymeric structure, being constituted in particular by copolyamide or polyethylene.

3. The method according to any of claims 1 or 2, **characterized in that** the electron bombardment is applied after the polymer spots have cooled.

4. The method according to claim 3, **characterized in that** the heat treatment and the application of radiation are operations that are independent, being performed on separate installations.

5. The method according to any of claims 1 to 4, **characterized in that** the spots of hot-melt polymer forming the protective underlayer contain a radical activator, e.g. a monomer of acrylate type, and selected in particular from trimethylolpropane trimethacrylate and trimethylolpropane triacrylate.

6. The method according to claim 5, **characterized in that** the outer layer is made from particles of copolyamide and the underlayer is made from a dispersion of copolyamide powder mixed with a radical activator, e.g. trimethylolpropane trimethacrylate at a concentration of 10% by weight radical activator relative to the polyamide.

7. The method according to any of claims 1 to 4, **characterized in that** the spots of hot-melt polymer forming the protective underlayer are based on a functional polymer having functional groups for generating free radicals under the action of electron bombardment and functional groups suitable for reacting with the free radicals formed thereby.

## Patentansprüche

1. Verfahren zur Herstellung eines schmelzfixierbaren Einlagestoffs, **dadurch gekennzeichnet, daß** es darin besteht:
a) mittels eines Siebdruckrahmens direkt auf die Oberfläche eines Textil- oder Vlies-Trägers (2) Polymerpunkte, die eine Schutzunterschicht (3a) bilden, aufzubringen, wobei das Polymer ein unvernetztes, aber durch Anwendung eines Elektronenbeschusses vernetzbares, warmschmelzbares Polymer ist,
b) auf die Unterschicht (3a) eine obere Schicht (3b) aus einem heißklebenden, durch einen Elektronenbeschuß nicht vernetzbaren Polymer aufzubringen, die eine Polymerstruktur aufweist, welche mit derjenigen des Polymers der Unterschicht kompatibel ist,
c) den Träger (2) einer Wärmebehandlung zu unterziehen, um das heißklebende Polymer auf der Schutzunterschicht zum Schmelzen zu bringen, und
d) nach der Wärmebehandlung den Einlagestoffträger der Wirkung eines Elektronenbeschusses auszusetzen, so daß das Polymer der Unterschicht vernetzt wird.

2. Verfahren nach Anspruch 1, **dadurch gekennzeichnet, daß** das Polymer der Unterschicht (3a) und das Polymer der oberen Schicht (3b) die gleiche Polymerstruktur aufweisen, wobei es sich insbesondere um Copolyamid oder Polyethylen handelt.

3. Verfahren nach einem der Ansprüche 1 oder 2, **dadurch gekennzeichnet, daß** die Anwendung des Elektronenbeschusses nach dem Abkühlen der Polymerpunkte erfolgt.

4. Verfahren nach Anspruch 3, **dadurch gekennzeichnet, daß** die Wärmebehandlung einerseits und die Strahlungsanwendung andererseits unabhängige Vorgänge sind, die an getrennten Einrichtungen durchgeführt werden.

5. Verfahren nach einem der Ansprüche 1 bis 4, **dadurch gekennzeichnet, daß** die Punkte aus warmschmelzbarem Polymer, welche die Schutzunterschicht bilden, einen radikalischen Aktivator, zum Beispiel ein Monomer vom Typ Acrylat enthalten, der insbesondere unter Trimethylolpropantrimethacrylat und Trimethylolpropantriacrylat ausgewählt ist.

6. Verfahren nach Anspruch 5, **dadurch gekennzeichnet, daß** die obere Schicht aus Copolyamidpartikeln und die Unterschicht aus einer Dispersion von Copolyamidpulver in Mischung mit einem radikalischen Aktivator, beispielsweise Trimethylolpropantrimethacrylat in einer Menge von 10 Gew.-% radikalischer Aktivator bezogen auf das Polyamid gebildet ist.

7. Verfahren nach einem der Ansprüche 1 bis 4, **dadurch gekennzeichnet, daß** die Punkte aus warmschmelzbarem Polymer, welche die Schutzunterschicht bilden, auf Basis eines funktionellen Polymers sind, das funktionelle Gruppen umfaßt, die unter der Wirkung eines Elektronenbeschusses freie Radikale erzeugen, sowie funktionelle Gruppen, die geeignet sind, mit so gebildeten freien Radikalen eine Reaktion einzugehen.
